# EUROPEAN PATENT APPLICATION

(11) **EP 2 905 507 A2**
(43) Date of publication of application: **12.08.2015**
(21) Application number: 14182817.8
(22) Date of filing: 29.08.2014
(51) Int. Cl.: F16H 25/20

(54) **Thrust cylinder with offset drive screw**

(30) Priority: 29.08.2013 US 201361871469 P
(71) Applicant: PARKER HANNIFIN CORPORATION, Cleveland, OH 44124-4141 (US)
(72) Inventor: Baric, Thomas J, Trafford, PA 15085 (US); Bridges, Mike D, Monroeville, PA 15146 (US); Halimic, Adis, Cheswick, PA 15024 (US)
(74) Representative: Belcher, Simon James

(57) **Abstract**

A linear actuator having particular application for reconfigurable fixtures used to hold large area workpieces, has a thrust rod connected to a translatable nut member that is driven by a rotatable drive screw that has a longitudinal axis off-set from the longitudinal axis of the thrust rod that preferably is centrally disposed within the housing of the actuator. The off-set axis of the drive screw enables the drive screw per unit size to handle greater loads and run at higher speeds. Also, the use of a solid thrust rod enables the thrust rod per unit size to handle greater loads and be less expensive as opposed to being hollow when the drive screw is coaxial with the thrust rod. This arrangement also enables less material to be used to manufacture the linear actuator per unit size. The linear actuators may be used as an alternative to existing assemblies with central thrust rods.

## Description

The present invention relates generally to actuators, and more particularly to linear actuators having particular application in a holding fixture, and more particularly in a holding fixture capable of holding a predetermined contoured workpiece such as an aircraft skin panel.

Reconfigurable fixtures have been used for holding large area workpieces in a proper position for manufacturing. Such fixtures have included a planar array of linear actuators including thrust rods that can be controllably extended collectively to define a contoured support surface for a large area workpiece such as an aircraft skin panel. The ends of the thrust rods may be equipped with holding devices such as suction cups for holding the workpiece to the thrust rods.

The linear actuators typically included a screw and nut drive assembly for extending and retracting a tubular thrust rod relative to an actuator housing. The tubular thrust rod and screw were coaxial, with the drive screw extending into the hollow interior of the tubular thrust rod. In another known linear actuator, the tubular thrust rod was replaced by a circumferential arrangement of four smaller but solid thrust rods connected between the nut member that was driven by rotation of the screw and an end plate at the opposite end of the thrust rods. The drive nut member was guided by a plurality of guide rods mounted between opposite end plates of the housing. The four smaller thrust rods were each separately sealed, in contrast to a single seal for the tubular thrust rod.

The present invention provides a linear actuator having particular application for reconfigurable fixtures used to hold large area workpieces. The linear actuators include a thrust rod connected to a translatable nut member that is driven by a rotatable drive screw that has a longitudinal axis off-set from the longitudinal axis of the thrust rod that preferably is centrally disposed within the housing of the actuator. The off-set axis of the drive screw enables the drive screw per unit size to handle greater loads and run at higher speeds. Also, the use of a solid thrust rod enables the thrust rod per unit size to handle greater loads and be less expensive as opposed to being hollow when the drive screw is coaxial with the thrust rod. This arrangement also enables less material to be used to manufacture the linear actuator per unit size. The linear actuators may be used as an alternative to existing assemblies with central thrust rods.

The invention therefore provides a linear actuator including a housing, a thrust rod disposed centrally within the housing and having an end portion extending from an end of the housing, the thrust rod having a longitudinal axis, a rotatable drive screw disposed within the housing and having a longitudinal axis parallel to the longitudinal axis of the thrust rod, and a translatable nut member disposed within the housing in threaded engagement with the drive screw and connected to the thrust rod for longitudinal movement therewith, the translatable nut member being driven upon rotation of the drive screw along the longitudinal axis of the drive screw, and wherein the drive screw is radially outwardly offset from the centrally disposed thrust rod.

The invention also provides a linear actuator including a housing having a longitudinal centre axis, a thrust rod disposed within the housing and having an end portion extending from an end of the housing, the thrust rod having a longitudinal axis, a rotatable drive screw disposed within the housing and having a longitudinal axis parallel to and offset from the longitudinal centre axis of the housing, and a translatable nut member disposed within the housing in threaded engagement with the drive screw and connected to the thrust rod for longitudinal movement therewith, the translatable nut member being driven upon rotation of the drive screw along the longitudinal axis of the drive screw.

The invention also provides a linear actuator including a housing having a longitudinal centre axis, a thrust rod disposed within the housing and having an end portion extending from an end of the housing, the thrust rod having a longitudinal axis, a rotatable drive screw disposed within the housing and having a longitudinal axis parallel to the longitudinal axis of the thrust rod, a translatable nut member disposed within the housing in threaded engagement with the drive screw and connected to the thrust rod for longitudinal movement therewith, the translatable nut member being driven upon rotation of the drive screw along the longitudinal axis of the drive screw, and an anti-rotation guide extending along a length of the housing parallel to the longitudinal axis of the drive screw, the anti-rotation guide being located at a side of the thrust rod diametrically opposite the drive screw.

Optionally, opposite ends of the drive screw are rotatably supported by respective bearings fixed in the housing.

Optionally, the linear actuator includes an anti-rotation guide configured to prevent rotation of the translatable nut member about the longitudinal axis of the drive screw relative to the housing.

Optionally, the anti-rotation guide includes a rod extending between opposite ends of the housing and on which the translatable nut member slides.

Optionally, the anti-rotation guide is disposed on a side of the thrust rod diametrically opposite the drive screw.

Optionally, the translatable nut member includes a thrust plate to which the thrust rod is attached and a nut attached to the thrust plate.

Optionally, the longitudinal axis of thrust rod is concentric with the longitudinal axis of the housing.

Optionally, the thrust rod is movable between a fully retracted position and a fully extended position, and wherein the extent of the thrust rod that is housed within the housing when in the retracted position of the thrust rod has a solid cross-section.

Optionally, there is only a single said thrust rod.

Optionally, the linear actuator includes a motor coupled to the drive screw, preferably with the rotational axis of the motor coaxial with the longitudinal axis of the drive screw.

Optionally, a reconfigurable fixture comprising a base and a plurality of the linear actuators of any above aspect mounted to the base, preferably with the actuators disposed parallel with respect to one another.

Optionally, the thrust rods of a plurality of the linear actuators are equipped with holding devices such as suction cups for holding the workpiece to the thrust rods.

Optionally, the drive screw includes a reduced diameter portion at an end of the drive screw.

The invention is described below by way of example with reference to the accompanying drawings, in which
Fig. 1 is a partial perspective view of a reconfigurable fixture supporting an aircraft wing, which fixture includes an array of linear actuators.
Fig. 2 is a perspective view of a linear actuator useful in the fixture of Fig. 1.
Fig. 3 is perspective view similar to Fig. 2, but with part of the actuator's housing cut-away to show internal components.
Fig. 4 is a top view of the linear actuator of Fig. 2, with part of the housing cut-away to show internal components.
Fig. 5 is a side view of the linear actuator of Fig. 2, with part of the housing cut-away.
Fig. 6 is a cross-sectional view taken along the line 6-6 of Fig. 5.
Fig. 7 is a perspective view of another exemplary linear actuator.
Fig. 8 is a cross-sectional view of the actuator of Fig. 7.

The invention has application to linear actuators, such as electromechanical linear actuators, for effecting movement of manufacturing components, such as manufacturing workpieces, tools, or tool holders, and thus will be described below chiefly in this context. Such a linear actuator may be suitable for raising, lifting, or otherwise moving or supporting a manufacturing component. The invention can also be useful in other applications where it is desirable to effect movement, such as in construction equipment, gate operation, etc.

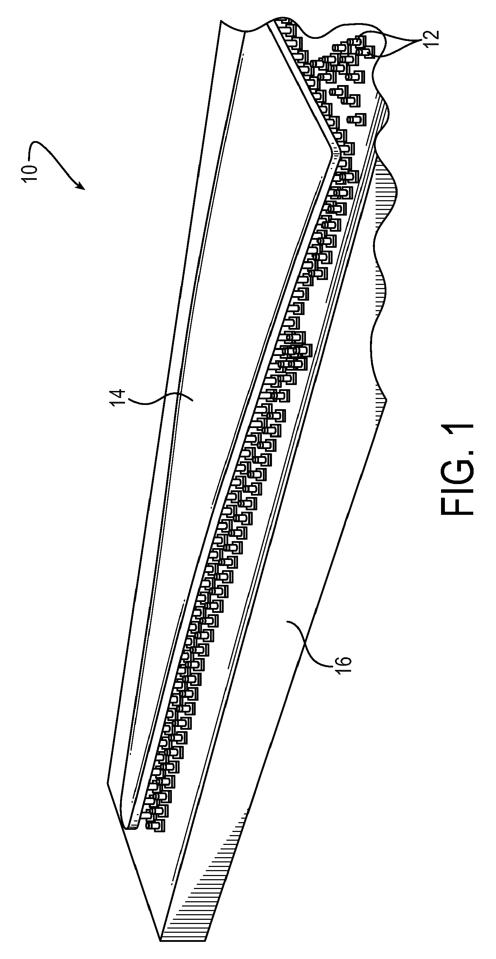

Referring to the drawings, Fig. 1 shows a manufacturing set up 10, in particular a reconfigurable fixture. The fixture includes a plurality of linear actuators 12 for raising and/or supporting a workpiece 14, such as an aircraft wing. The linear actuators 12 are secured, such as bolted, to a base surface, such as a work table 16. A portion of the actuators extend vertically therefrom to raise and thereafter maintain a raised height of the workpiece 14, or more particularly respective regions of the workpiece 14 for various manufacturing operations, such as cutting or drilling operations. The extension of the linear actuators can be varied to fit the contour of the workpiece 14 or to determine the contour of the workpiece 14. As is known, the rod ends of the linear actuators may be equipped with suction devices for holding respective portions of the workpiece surface to the rod ends.

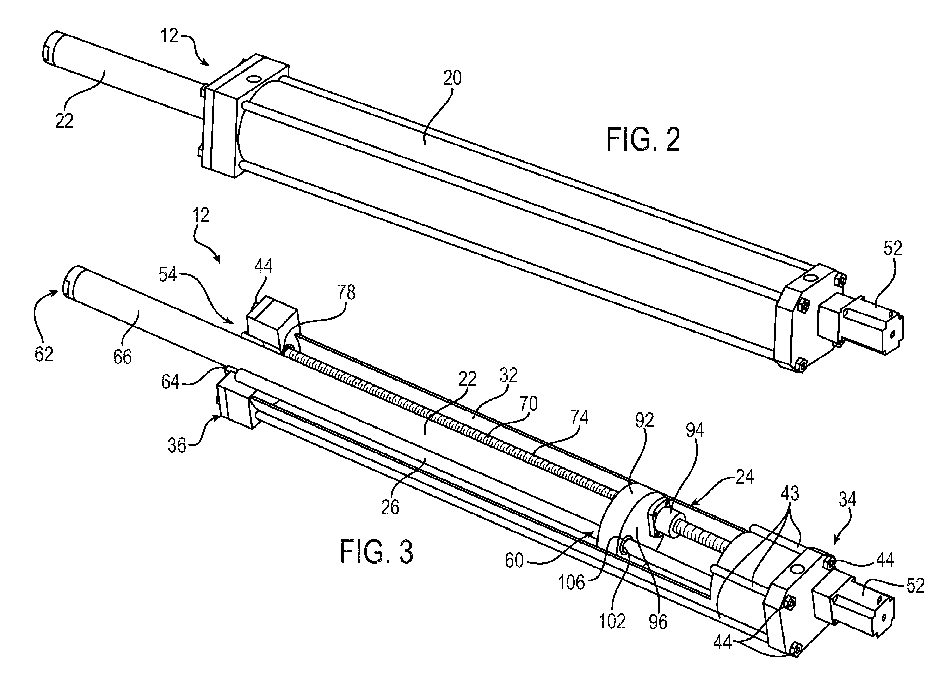

Figs. 2 to 6 show one of the linear actuators 12, which includes an actuator housing 20, a thrust rod 22 for extending and retracting in relation to the actuator housing 20, a drive screw assembly 24 disposed within the actuator housing 20, and an anti-rotation guide 26 for preventing rotation of the thrust rod relative to the drive screw assembly 24. Rotational movement of the drive screw assembly 24 is translated into axial movement of the thrust rod 22 relative to the actuator housing 20. Particularly, the thrust rod 22 is caused to move axially along a longitudinal axis, such as longitudinal axis A of the thrust rod 22 and the actuator housing 20.

As seen in Figs. 3 to 6, the actuator housing 20 has a tubular portion or sleeve 32 that extends axially between a first end 34 and a second end 36 of the actuator housing. Located at the first and second ends 34 and 36 of the housing are a proximal end wall 40 and a distal end wall 42, respectively. In the device shown in the drawings, the end walls 40 and 42 are formed by end caps. The end caps 40 and 42 are secured to and close the ends of the tubular portion 32. The end caps 40 and 42 are held to the ends of the tubular portion by tie bars 43 and associated nuts 44, although other suitable attachment means may be used. The sleeve 32 may be circular in cross-section and the end walls may be generally square in cross-section such that the corners of the end walls project beyond the sleeve. These projecting corners may have formed therein holes through which the ends of the tie bars extend.

The actuator housing 20 may be made of aluminium, steel, or another suitable material. The actuator housing 20 may be of a length, width, and height to receive a substantial extent of the thrust rod 22 when the thrust rod 22 is retracted into the housing interior 32. The thrust rod 22 extends axially along the longitudinal axis A through an opening 54 in the distal end wall 42 concentric with the longitudinal axis A for securing the thrust rod 22 from lateral movement and allowing axial movement through it.

The thrust rod 22 has a proximal end 60 and a distal end 62 that may include a mount for a holding component, such as a suction cup. The length of the thrust rod 22 from the proximal end 60 to the distal end 62 is illustrated as a solid (i.e., non-hollow) rod. The thrust rod 22 being solid allows less expensive manufacturing of the thrust rod 22 because manufacturing steps can be avoided. For example, the manufacturing steps to hollow-out a substantial portion of the thrust rod 22, as well as the manufacturing steps to provide a precise and smooth surface inside the thrust rod 22 for a radial bearing to slide within are not necessary. Preferably, the proximal end 62 does not include any opening concentric with the thrust rod 22. More preferably, less than 10% of the thrust rod 22 is hollow.

The thrust rod 22 may be a cylindrical rod, entirely solid (i.e., non-hollow), substantially solid (i.e., substantially non-hollow), hollow, or of any other suitable shape and cross-section. Further, the thrust rod 22 may be made of steel or another suitable material.

The distal end 62 of the thrust rod 22 is extendable toward and away from the distal end 42 of the actuator housing 20. An intermediate portion of the thrust rod 22 is supported during axial movement of the thrust rod 22 to prevent lateral movement by a bearing 64 coaxial with the longitudinal axis A. The bearing 64 is shown as a bushing disposed in the distal end wall 42 of the actuator housing 20 and may be any other suitable bearing, such as a radial rod bearing, a slider bearing, or another type of bushing. The bearing 64 may slidably engage an outer circumference 66 of the thrust rod 22, thus supporting the thrust rod 22 about its outer circumference 66. The bearing 64 may seal against the outer circumference 66 to prevent contaminants from entering the actuator housing 20. Otherwise, a seal or wiper may be used to prevent contamination during actuation. The thrust rod 22 is driven into and out of the housing 20 by the drive screw assembly 24.

The drive screw assembly 24 is rotatably attached to the proximal and distal end walls 40 and 42. The drive screw assembly 24 is attached at locations laterally spaced from the longitudinal axis A and the thrust rod 22. Laterally spacing the drive screw assembly allows the thrust rod 22 to be solid (i.e., non-hollow) at the proximal end 60 because the no portion of the drive screw assembly 24 needs to be located within the thrust rod 22.

As the drive screw assembly 24 axially drives the thrust rod 22, outward and inward of the actuator housing 20, the drive screw assembly may urge the thrust rod 22 to rotate relative to the actuator housing 20 or the drive screw assembly 24. Maintaining axial movement allows the thrust rod 22 to extend and retract more easily into a desired position without jamming the thrust rod 22 against bearing 64 or jamming the drive screw assembly 24.

The drive screw assembly 24 includes a rotatable drive screw 70 disposed in the actuator housing 20 and a translatable nut member 72 with inner threads that engage with the drive screw 70. The drive screw 70 and translatable nut member 72 may be components of any suitable rotational movement to axial movement device, such as a ball screw assembly or of a roller screw assembly. As the drive screw 70 rotates the translatable nut member 72 is driven axially and thereby drives the thrust rod 22 axially.

The drive screw 70 extends axially along a longitudinal axis B of the drive screw 70 and includes outer threads 74 between the first end 86 and the second end 90 of the drive screw 70. Rotational movement of the drive screw 70 causes the translatable nut member 72 to be translated along the centre longitudinal axis B of the drive screw 70 relative to the rotational movement of the drive screw 70. As shown in the drawings, the longitudinal axis A, the thrust rod 22 and the actuator housing 20 may be coincident and the longitudinal axis B is off-set from the thrust rod 22. Thus, rotational movement of the drive screw 70 may cause the translatable nut member 72 to be driven axially along the longitudinal axis A of the actuator housing 20. Thereby, axial movement of the thrust rod 22 coupled to the translatable nut member 72 may be effected, the axial movement of the thrust rod 22 also being along the centre axis of the actuator housing.

As shown, the drive screw 70 extends between the proximal and distal end walls 40 and 42. A first end 86 of the drive screw 70 is disposed within the proximal end wall 40 and a second end 90 is disposed within the distal end wall 42. In one construction, a portion of at least one of the first end 86 or the second end 90 abuts a portion of the actuator housing 20. The drive screw 70 is radially outwardly spaced from the thrust rod 22 and the longitudinal axis A relative to the actuator housing 22. Additionally, the thrust rod 22 is radially inwardly spaced from the drive screw 70 relative to the actuator housing 22 to allow the thrust rod 22 to be concentric with the actuator housing 20 and the drive screw 70 to be adjacent the tubular portion 32 of the actuator housing 20. The drive screw 70 is adjacent to the tubular portion 32 and journalled in the proximal end wall 40 and the distal end wall 42 by suitable means such as a bearing 76 and a bearing 78.

The first end 86 of the drive screw 70 may be supported against radial and/or axial movement by the bearing 76, such as a radial bearing, a radial screw bearing, an angular contact bearing, or a thrust bearing. The bearing 76 is disposed within the proximal end wall 40. Alternatively, the end wall may form at least a portion of the bearing 76. In one construction, the first end 86 is coupled to a drive shaft of a motor 52. The bearing 76 can be mounted in the proximal end wall 40 or otherwise in the actuator housing 20. The second end 90 of the drive screw 70 may be supported by the bearing 78.

The bearing 78 may be coupled, such as rotatably journalled, to an axially extending reduced diameter portion 88 of the drive screw 70 at the second end 90. The drive screw 70 may be rotatably connected to the bearing 78 disposed at the second end 86 within the distal end wall 42 to facilitate holding the drive screw 70 in tension to counter a buckling force caused by load on the thrust rod 22 exerting force on the translatable nut member 72 and buckling of the drive screw 70. Alternatively, the end wall may form at least a portion of the bearing. The bearing 78 may be any suitable type of bearing, preferably an angular contact bearing or a thrust bearing, less preferably a radial bearing, bushing, or any other suitable bearing. Use of a bearing type able to support an axial load allows the drive screw 70 to be put into tension by holding the second end 90 of the drive screw 70 with a bearing that allows the drive screw 70 to be held.

Holding the drive screw 70 in tension prevents buckling of the drive screw 70 and allows better performance and longer life. The tension also allows a drive screw 70 with a smaller diameter to operate at the same load and speed as a larger diameter drive screw without such tension. For example, the motor 52 may attach to the distal end wall 42, which may be located lower relative to the centre of the earth than the proximal end wall 40 to put the drive screw 70 in tension.

The motor 52 drives the drive screw 70 and may be a rotary motor or any other suitable type of prime mover. The motor 52 may be coupled to the proximal end wall 40 for securing the motor 52 against rotational movement relative to the actuator housing 20. The proximal end wall 40 may have a first opening 50 for allowing coupling of the drive screw assembly 24 to the motor 52. In one construction, the motor has a drive shaft that is parallel with, but not coaxial with the drive screw. Alternatively, rotational motion of the drive screw 70 may be provided by any other suitable method at the first end 86 opposite the second end 90.

At the second end 90, the reduced diameter portion 88 extends axially away from the first end 86 and is coaxial with the longitudinal axis B. The reduced diameter portion 88 engages the bearing 78 and allows positioning the drive screw 70 closer to the thrust rod 22. Positioning the drive screw 70 closer allows the overall footprint of the linear actuator to be reduced. The reduced diameter portion 88 may be less than 50% an average diameter of the drive screw 70 to reduce the footprint of the linear actuator 12 while still allowing the drive screw 70 to drive the thrust rod 22 through the translatable nut member 72.

The translatable nut member 72 includes a thrust/guide plate 92 (which may be referred to as a "guide ring" or "piston") and a nut 94 with inner threads that engage with the drive screw 70. The outer threads 74 of the drive screw 70 allow threaded engagement with the nut 94.

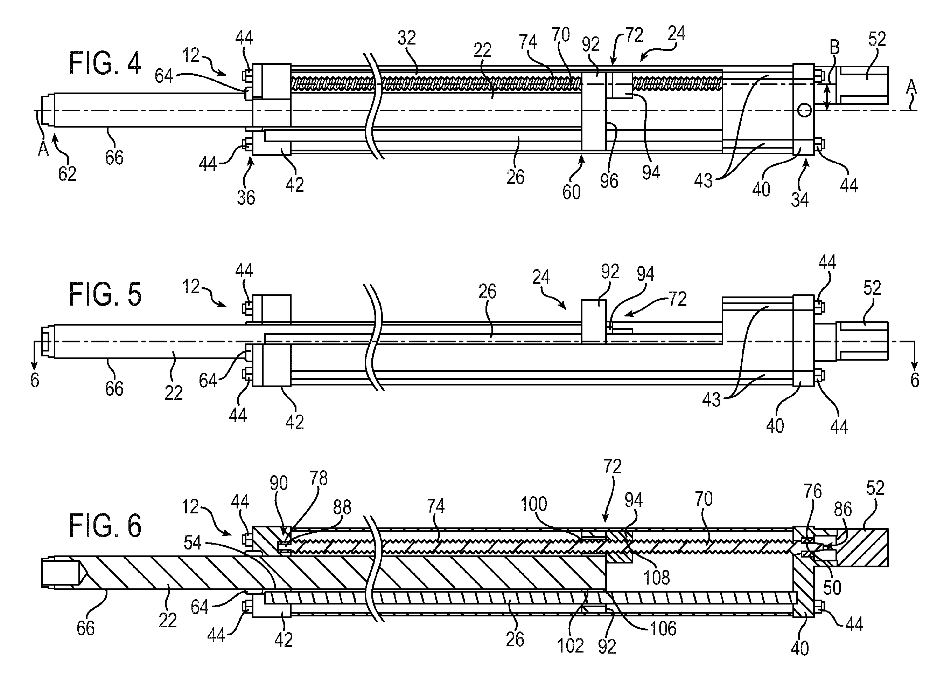

The nut 94 includes inner threads 108, shown in Fig. 6, for engaging the drive screw 70. The inner threads 108 may be formed of fixed threads or formed by ball bearings. For example, the nut may be a ball screw nut that circulates ball bearings to smoothly translate along the drive screw 70. The nut may couple the thrust rod 22 to the drive screw 70, either directly or indirectly, the thrust rod 22 to translate axially in response to rotational movement of the drive screw 70. The nut 94 and the thrust rod 22 may be directly coupled, such as fixedly attached via threaded engagement, welding, adhesives, or other suitable method. Alternatively, the thrust/guide plate 92 may have threads for engaging the drive screw.

The thrust/guide plate 92 is a cylindrical portion with a radially outward facing surface facing the actuator housing 20 and includes an axially facing surface 96 connected to the nut 94, a drive screw passage 100 parallel to the longitudinal axis A, and an anti-rotation guide passage 102 parallel to the longitudinal axis A. The thrust/guide plate 92 forms one-piece with the thrust rod 22. In one arrangement, the thrust rod is connected to the thrust/guide plate 92 in any suitable manner, such as bolting or welding. In another arrangement, the drive screw assembly 24 can be slidably coupled to the anti-rotation guide 26 without abutting the actuator housing to prevent rotational movement of the thrust rod.

The anti-rotation guide 26 prevents rotation of the thrust rod 22 and allows the thrust rod 22 to maintain alignment with the longitudinal axis A and only move axially along the longitudinal axis A. The anti-rotation guide 26 extends axially between the proximal and distal end walls 40 and 42. The anti-rotation guide 26 is connected to the first and second ends 34 and 36 at locations laterally spaced from the longitudinal axis A and diametrically opposite the locations connecting the drive screw assembly 24. Alternatively, the anti-rotation guide may extend partially between the first and second ends 34 and 36. In one construction, the anti-rotation guide 26 is not diametrically opposite the locations connecting the drive screw assembly 24 to the actuator housing 20.

The anti-rotation guide 26 may be laterally spaced from the longitudinal axis A and opposite the locations connecting the drive screw assembly 24 in any suitable location to prevent rotation of the thrust rod 22 relative to the drive screw assembly 24. In one construction, an anti-rotation guide and the corresponding anti-rotation guide passage are not present and the drive screw alone prevents rotation of the thrust tube relative to the drive screw assembly. The proximal end 60 of the thrust rod is supported against radial movement via a portion of the thrust/guide plate 92 abutting an inner wall of the actuator housing 20 and the anti-rotation guide 26 slidably coupling to the thrust/guide plate 92. During use the anti-rotation guide passage 102 slides along the anti-rotation guide 26 while the drive screw passage 100 slides along or adjacent to the drive screw 70.

The drive screw passage 100 is illustrated as generally cylindrical, axially extending, without threading, and laterally off-set from the thrust rod 22 to engage the drive screw 70. A screw bearing may be disposed within the drive screw passage 100 to support the drive screw 70. In one construction, the drive screw passage has inner threading to engage the drive screw. Threading the drive screw passage allows the drive screw 70 to drive the thrust rod 22 without a nut. Threading the drive screw passage 100 also allows the drive screw passage 100 to receive the force otherwise applied to the nut 94 when being driven parallel to the anti-rotation guide passage 102 by the drive screw 70.

The anti-rotation guide passage 102 is illustrated as generally cylindrical, axially extending, and laterally off-set from the drive screw passage to slidably connect with the anti-rotation rod 26. A bearing 106 is disposed within the anti-rotation guide passage 102. The bearing 106 allows a tight slidable connection between the anti-rotation guide passage 102 and the anti-rotation rod 26. In one construction, the anti-rotation guide passage 102 is disposed at a radially outward portion of the thrust/guide plate 92 to engage an axially extending radially inward facing protrusion connected to the actuator housing to prevent rotational movement of the thrust rod 22. In another construction, the anti-rotation guide passage is part of a radially inward facing portion of the actuator housing and engages a radially outward extending protrusion of the thrust/guide plate 92 to prevent rotational movement of the thrust rod 22.

During operation, the thrust rod 22 extends and retracts to a desired position. The motor 52 drives the drive screw 70, which in turn drives the translatable nut member 72. The translatable nut member 72 moves axially along the drive screw 70 to drive the thrust rod 22. The anti-rotation guide 26 prevents rotation of the translatable nut member 72 relative to the anti-rotation guide 26 and allows the translatable nut member 72 to move axially along the anti-rotation guide 26 to position the thrust rod 22. The thrust rod 22 may support a workpiece statically. For example, when the thrust rod 22 is in a desired position, a workpiece may be placed at the distal end 62 of the thrust rod to support the workpiece in place.

As shown in Fig. 1, a plurality of linear actuators 12 may each include a thrust rod that is positioned based on a relative position of each linear actuator of the plurality of linear actuators 12. Thus, the thrust rods of each of the plurality of linear actuators may be positioned collectively form the shape of a contour of the workpiece 14. Alternatively, the thrust rod 22 may be extended or retracted after the workpiece 14 is placed at the distal end 62. In one construction, the thrust rod 22 is dynamically loaded. For example, the thrust rod 22 may be moved to re-position an already supported workpiece or additional load may be placed on the thrust rod 22 during manufacturing. In another construction, the thrust rod 22 is used to position components outside of the manufacturing context. For example, the thrust rod 22 may retract or extend a door or wing on a vehicle while the vehicle is in use.

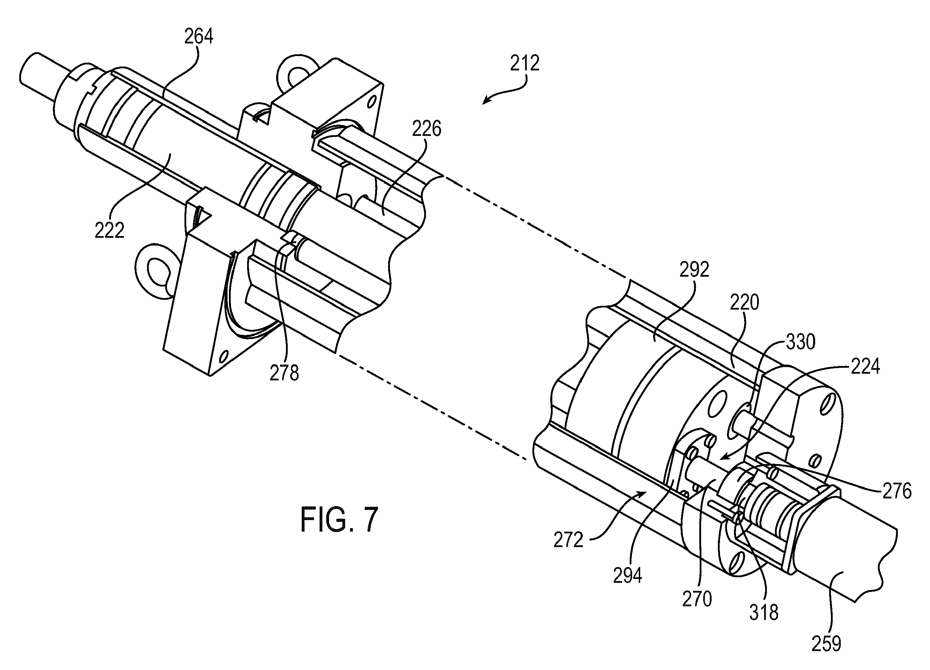

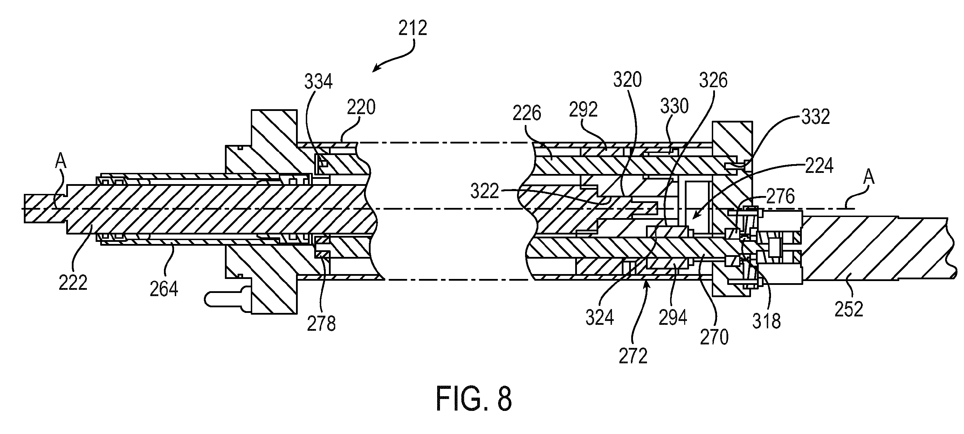

Figs. 7 and 8 show another linear actuator 212 which is substantially the same as the linear actuator 12 discussed above. The same reference numerals but indexed by 200 respectively are used to denote structures corresponding to similar structures in the linear actuator 212. In addition, the description of the linear actuator 12 set out above is equally applicable to the linear actuator 212 except as noted below. Moreover, aspects of the linear actuators may be substituted for one another or used in conjunction with one another where applicable.

Figs. 7 and 8 show a linear actuator 212 including an actuator housing 220, a thrust rod 222 for extending and retracting in relation to the actuator housing 220 and having outer threads 320, a drive screw assembly 224 disposed within the actuator housing 220, an anti-rotation guide 226 for preventing rotation of the thrust rod relative to the drive screw assembly 224, and a bearing 264 for slidably engaging thrust rod 222.

The drive screw assembly 224 includes a rotatable drive screw 270 disposed in the actuator housing 220 and a translatable nut member 272 with inner threads that engage with the drive screw 270.

The drive screw 270 engages a bearing 276 that is held in place by a nut 318. The bearing 276 may be any suitable bearing, such as an angular contact bearing. The nut 318 engages the drive screw 270 to axially abut the bearing 276 and prevent axial movement relative to the drive screw 270. The nut 318 may be any suitable nut, such as a lock nut. In one construction, an axially facing portion of a motor 252 abuts the bearing 276 to hold the bearing 276 in place. As the drive screw 270 rotates the translatable nut member 272 is driven axially and thereby drives the thrust rod 222 axially.

The translatable nut member 272 includes a thrust/guide plate 292 (which may be referred to as a "guide ring" or "piston") with inner threads 322 that engage with the outer threads 320 of the thrust rod 222 and a nut 294 with inner threads that engage with the drive screw 270. The inner threads 322 extend concentrically with the outer threads 320 to prevent axial movement of the thrust rod 222 relative to the thrust/guide plate 292.

The thrust/guide plate 292 engages with and axially translates with the nut 294. The thrust/guide plate 292 has inner threads 324 that engage with and are coaxial with outer threads 326 of the nut 294 to prevent the thrust/guide plate 292 from relative axial movement relative to the nut 294.

The thrust/guide plate 292 further includes a bearing 330 coaxial with the anti-rotation guide 226. The bearing 330 allows the thrust/guide plate 292 to translate axially along the anti-rotation guide 226 and also engages the anti-rotation guide 226 to prevent radial movement of the thrust/guide plate 292 relative to the anti-rotation guide 226.

As best shown in Fig. 8, the anti-rotation guide 226 includes a first engagement portion 332 and a second engagement portion 334 at opposite ends of the anti-rotation guide 226 for radially fixing the anti-rotation guide 226 to the actuator housing 220. The first and second engagement portions 332 and 334 are illustrated as axially extending cavities. Alternatively, at least one of the first and second engagement portions may include a protruding portion that engages a corresponding cavity within the actuator housing. As the translatable nut member slides along the anti-rotation guide 226 during retraction or extension, the thrust rod 222 slides along the bearing 264.

Referring again to Figs. 7 and 8, the bearing 264 extends axially outside of the actuator housing 220. Extending the bearing 264 axially outside allows greater support of the thrust rod 222 to prevent radial bending of the thrust rod 222. Greater than 60% of a length of the bearing 264 extends axially outside of the actuator housing 220. In one construction, 60% or less of the bearing 264 extends axially outside of the actuator housing 220 to allow greater displacement length of the thrust rod 22. The bearing 264 may be any suitable bearing, such as a bushing, preferably a two-piece bronze bushing.

Although the invention has been shown and described with respect to a certain embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A linear actuator including:
a housing,
a thrust rod disposed centrally within the housing and having an end portion extending from an end of the housing, the thrust rod having a longitudinal axis,
a rotatable drive screw disposed within the housing and having a longitudinal axis parallel to the longitudinal axis of the thrust rod, and
a translatable nut member disposed within the housing in threaded engagement with the drive screw and connected to the thrust rod for longitudinal movement therewith, the translatable nut member being driven along the longitudinal axis of the drive screw upon rotation of the drive screw along the longitudinal axis of the drive screw,
in which the drive screw is radially outwardly offset from the centrally disposed thrust rod.

2. A linear actuator including:
a housing having a longitudinal centre axis,
a thrust rod disposed within the housing and having an end portion extending from an end of the housing, the thrust rod having a longitudinal axis,
a rotatable drive screw disposed within the housing and having a longitudinal axis parallel to and offset from the longitudinal centre axis of the housing, and
a translatable nut member disposed within the housing in threaded engagement with the drive screw and connected to the thrust rod for longitudinal movement therewith, the translatable nut member being driven upon rotation of the drive screw along the longitudinal axis of the drive screw.

3. A linear actuator including:
a housing having a longitudinal centre axis,
a thrust rod disposed within the housing and having an end portion extending from an end of the housing, the thrust rod having a longitudinal axis,
a rotatable drive screw disposed within the housing and having a longitudinal axis parallel to the longitudinal axis of the thrust rod,
a translatable nut member disposed within the housing in threaded engagement with the drive screw and connected to the thrust rod for longitudinal movement therewith, the translatable nut member being driven upon rotation of the drive screw along the longitudinal axis of the drive screw, and
an anti-rotation guide extending along a length of the housing parallel to the longitudinal axis of the drive screw, the anti-rotation guide being located at a side of the thrust rod diametrically opposite the drive screw.

4. The linear actuator of any one of claims 1 to 3, in which opposite ends of the drive screw are rotatably supported by respective bearings fixed in the housing.

5. The linear actuator of any one of claims 1 to 4, further including an anti-rotation guide configured to prevent rotation of the translatable nut member or the thrust rod or each of the translatable nut member and the thrust rod about the longitudinal axis of the drive screw.

6. The linear actuator of claim 5, in which the anti-rotation guide includes a rod extending between opposite ends of the housing and on which the translatable nut member slides.

7. The linear actuator of claim 5 or claim 6, in which the anti-rotation guide is disposed on a side of the thrust rod diametrically opposite the drive screw.

8. The linear actuator of any one of claims 1 to 7, in which the translatable nut member includes a thrust plate to which the thrust rod is attached and a nut attached to the thrust plate.

9. The linear actuator of any one of claims 1 to 8, in which the longitudinal axis of thrust rod is concentric with the longitudinal axis of the housing.

10. The linear actuator of any one of claims 1 to 9, in which the thrust rod is movable between a fully retracted position and a fully extended position, and in which the extent of the thrust rod that is housed within the housing when in the retracted position of the thrust rod has a solid cross-section.

11. The linear actuator of any one of claims 1 to 10, in which there is only a single said thrust rod.

12. The linear actuator of any one of claims 1 to 11, further including a motor coupled to the drive screw, preferably with a rotational axis of the motor coaxial with the longitudinal axis of the drive screw.

13. The linear actuator of any one of claims 1 to 12, in which the drive screw includes a reduced diameter portion at an end of the drive screw.

14. A reconfigurable fixture comprising a base and a plurality of the linear actuators of any one of claims 1 to 13 mounted to the base, preferably with the actuators disposed parallel with respect to one another.

15. The reconfigurable fixture of claim 14, in which the thrust rods of the linear actuators are equipped with holding devices such as suction cups for holding the workpiece to the thrust rods.
